# EUROPÄISCHE PATENTSCHRIFT

(11) **EP 3 123 105 B1**
(45) Veröffentlichungstag und Bekanntmachung des Hinweises auf die Patenterteilung: **28.04.2021**
(21) Anmeldenummer: 15735838.3
(22) Anmeldetag: 20.03.2015
(51) Int. Cl.: G01B 5/00, G01B 5/08, G01B 5/20, B23Q 17/20

(54) **VORRICHTUNG UND VERFAHREN ZUM VERMESSEN EINES WERKSTÜCKS**
DEVICE AND METHOD FOR MEASURING A WORKPIECE
DISPOSITIF ET PROCÉDÉ POUR MESURER UNE PIÈCE

(30) Priorität: 27.03.2014 DE 102014104337
(43) Veröffentlichungstag der Anmeldung: 01.02.2017
(73) Patentinhaber: Ke-ma-tec GmbH Ketterer-Maschinen-Technologie, 78073 Bad Dürrheim (DE)
(72) Erfinder: KETTERER, Gunter, 78073 Bad Dürrheim (DE)
(74) Vertreter: Westphal, Mussgnug & Partner Patentanwälte mbB
(86) Internationale Anmeldenummer: PCT/DE2015/100117
(87) Internationale Veröffentlichungsnummer: WO 2015/144132

(56) Entgegenhaltungen:
- EP-A2- 0 097 537
- WO-A1-97/21076
- DE-C- 355 061
- DE-U1- 8 506 652
- DE-U1- 29 619 499
- FR-A- 898 558
- GB-A- 105 331
- GB-A- 2 021 990
- GB-A- 2 318 416
- US-A- 1 033 648
- US-A- 2 974 418
- US-A- 4 731 936

## Beschreibung

Die vorliegende Erfindung betrifft eine Vorrichtung zum Vermessen eines Werkstücks, insbesondere eine Vorrichtung zum Vermessen eines in einer Werkzeugbearbeitungsmaschine eingespannten Werkstücks, vor, während oder nach dem Bearbeiten des Werkstücks nach dem Oberbegriff des Patentanspruchs 1, wobei die Vorrichtung besonders geeignet ist, ein rotierendes, beispielsweise in einer Drehbank oder CNC-Bearbeitungsmaschine eingespanntes Werkstück vor und/oder während und/oder nach der Werkstückbearbeitung zu vermessen. Die Erfindung betrifft weiterhin eine Werkzeugmaschine mit einer solchen Vorrichtung sowie ein Verfahren zum Bestimmen wenigstens eines Parameters eines Werkstücks in einer solchen Vorrichtung nach Anspruch 20.

Eine solche Vorrichtung ist z. B. aus US 2,974,418 bekannt. Werkstattorientierte, schnelle Messungen in der Fertigung und die Kontrolle gefertigter Werkstücke direkt am Arbeitsplatz gewinnen in der heutigen Zeit zunehmend an Bedeutung.

Lange Wartezeiten auf fehlende Messergebnisse durch immer wiederkehrende Engpässe und langwierige Auswertungen in einem speziellen Messraum behindern heutzutage ein effektives und wirtschaftliches Fertigen und Prüfen von zu bearbeitenden oder bearbeiteten Werkstücken. Eine Vielzahl an Messmerkmalen könnte durch eine effektive Messwertermittlung direkt an der Produktionsmaschine im Vorfeld schnell und zuverlässig ermittelt werden. Die Hauptschwierigkeit liegt jedoch darin, geeignete Messmittel zu finden, die eine werkstattorientierte und zuverlässige, aber auch eine unkomplizierte Bedienung ohne Programmier- und Schulungsaufwand möglich machen.

Aufgabe der Erfindung ist es daher, flexible, einfach handhabbare und modular rasch aufbaubare Messanordnungen, die an einer Werkstückbearbeitungsmaschine angebracht werden können, vorzusehen, mit denen eine Vielzahl von Parametern des Werkstücks, sowohl vor, während als auch nach der Bearbeitung des Werkstücks erfasst werden können.

Diese Aufgabe wird gelöst durch eine Vorrichtung zum Vermessen eines Werkstücks nach Patentanspruch 1, eine Werkzeugmaschine nach Patentanspruch 19, die eine solche Vorrichtung aufweist, sowie durch ein Verfahren nach Patentanspruch 20. Vorteilhafte

Ausführungsformen sind in den jeweiligen Unteransprüchen offenbart.

Die erfindungsgemäße Vorrichtung zum Vermessen eines Werkstücks weist folgende Merkmale auf:
- einen Werkstückaufnahmeraum,
- einen auf einer ersten Bahn mittels einer ersten Schlittenführung mit mindestens zwei Bahnführungsöffnungen relativ zum Werkstückaufnahmeraum und entlang wenigstens eines Teils des Werkstückaufnahmeraums außerhalb des Werkstückaufnahmeraums bewegbaren ersten Schlitten,
- wenigstens einen relativ zum Werkstückaufnahmeraum und entlang wenigstens eines Teils des Werkstückaufnahmeraums außerhalb des Werkstückaufnahmeraums sowie parallel zur ersten Bahn auf Führungsstangen bewegbaren zweiten Schlitten,
- der zweite Schlitten ist über einen Kopplungsbügel an der am ersten Schlitten befestigt angeordneten ersten Schlittenführung bewegbar geführt angeordnet,
   wobei der zweite Schlitten auf einer zweiten Schlittenführung, die parallel zur ersten Schlittenführung angeordnet ist, beweglich ist, wobei die zweite Schlittenführung über den Kopplungsbügel, der außerhalb des Werkstückaufnahmeraums verlaufend angeordnet ist, mit dem ersten Schlitten fest verbunden ist, derart, dass der zweite Schlitten schwimmend mit dem ersten Schlitten bewegbar ist.

Eine derartige Vorrichtung ermöglicht die Aufnahme von Sensoren zur Vermessung des Werkstücks auf den ersten und/oder zweiten Schlitten. So kann beispielsweise mit taktilen Messmitteln, die auf dem ersten und/oder zweiten Schlitten angeordnet sind, die Rundheit, die Zylindrizität, die Parallelität, der Rund- und Planlauf, der Durchmesser und/oder das Kegelneigungsverhältnis eines Werkstücks allgemein gemessen werden. Parameter von das Werkstück umlaufenden Nuten können bestimmt werden. Besonders vorteilhaft ist eine solche Anordnung, wenn Parameter von am Werkstück angeordneten Gewinden bestimmt werden sollen. So kann der erste Schlitten beispielsweise einen ersten taktilen Messsensor, beispielsweise mit einer Messspitze aufweisen und dorthin fahren, wo ein Gewindegang zu vermessen ist. Die Messspitze des ersten Messsensors kann an einer ersten Stelle der Werkstückoberfläche in den Gewindegang eingreifen und sie dort vermessen. Auf dem zweiten Schlitten, der an dem ersten Schlitten bewegbar geführt angeordnet ist, kann ein zweiter taktiler Messensor mit einer zweiten Messspitze befestigt sein, der an einer zweiten Stelle der Werkstückoberfläche, beispielsweise an einer der ersten Stelle annähernd gegenüberliegenden Stelle des Werkstücks in den gleichen Gewindegang eingreift. Wenn das Werkstück rotationssymmetrisch um diesen Gewindegang rotiert kann so beispielsweise, während das Werkstück rotiert, die Gleichmäßigkeit der Gewindesteigung ermittelt werden. Da der zweite Schlitten relativ zum ersten Schlitten beweglich und damit schwimmend gelagert ist, kann, wenn das Werkstück rotiert und die Messspitzen der beiden Messsensoren an unterschiedlichen Stellen in den Gewindegang eingreifen, aus der sich bei der Messung einstellenden Änderung der relativen Lage des ersten Schlittens zum zweiten Schlitten während der Vermessung des Gewindegangs beispielsweise die Gleichmäßigkeit der Gewindesteigung bestimmt werden.

Besonders genau kann eine solche Messung beispielsweise dann ausgeführt werden, wenn, wie in einer bevorzugten Ausführung der Erfindung, der erste und/oder wenigstens eine zweite Schlitten beispielsweise eine Messanordnung aufweisen, mit der die Lage des wenigstens einen zweiten Schlittens relativ zum ersten Schlitten bestimmbar ist. Die Messanordnung kann in einer bevorzugten Ausführungsform die relative Lage des wenigstens einen zweiten Schlittens zum ersten Schlitten während der Messung, vorteilhafterweise zeitabhängig, protokollieren.

Vorteilhafterweise weist der erste und/oder der wenigstens eine zweite Schlitten eine Fixierung auf, mit der der wenigstens eine zweite Schlitten an dem ersten Schlitten fixierbar ist. Dadurch kann bei Bedarf der zweite Schlitten gegenüber dem ersten Schlitten arretiert werden. So ist es dann beispielsweise möglich, dass, wenn sowohl auf den ersten Schlitten als auch auf den zweiten Schlitten Messsensoren zum Vermessen des Werkstücks angeordnet sind, das Werkstück an zwei Stellen, die eine fixe Differenz zueinander aufweisen, vermessen werden kann.

Der Werkstückaufnahmeraum ist vorteilhafterweise zwischen dem ersten und dem wenigstens einen zweiten Schlitten angeordnet, so dass beispielsweise die Maße des Werkstücks von einander gegenüberliegenden Seiten bestimmt werden können, wobei der erste Schlitten mit dem wenigstens einen zweiten Schlitten über einen Kopplungsbügel, der außerhalb des Werkstückaufnahmeraums verlaufend angeordnet ist, verbunden ist. Bevorzugt umgreift dabei der Kopplungsbügel den Werkstückaufnahmeraum von unten, damit der Vermessungsbereich frei zugänglich ist.

Vorteilhaft ist eine solche Anordnung der beiden Schlitten zueinander besonders bei der Bestimmung von Werkstückdurchmessern z.B. Werkstückdurchmessern rotationssymmetrischer Werkstücke an bestimmten Stellen.

Auf dem ersten und/oder wenigstens einem zweiten Schlitten können selbstverständlich zusätzlich zu Messsensoren auch Bearbeitungswerkzeuge, beispielsweise spanabhebende Bearbeitungswerkzeuge angeordnet sein. Dann kann während der Bearbeitung eines zu bearbeitenden Werkstücks das Werkstück vermessen werden und so beispielsweise überprüft werden, ob bestimmte vorgegebene Maße durch die Bearbeitung des Werkstücks bereits erreicht sind.

Die Vorrichtung kann selbstverständlich zusätzlich einen dritten Schlitten aufweisen, der auf einer dritten Bahn bewegbar angeordnet ist, wobei der erste Schlitten mit dem dritten Schlitten vorteilhafterweise über wenigstens ein, vorzugsweise mechanisches, Kopplungselement so verbindbar ist, oder verbunden ist, dass die relative Lage zwischen dem ersten und dem dritten Schlitten fixiert wird.

Das Kopplungselement ist vorteilhafterweise als Kopplungsbügel ausgebildet, der vorzugsweise so geformt ist, dass er, wenn der erste Schlitten mit dem dritten Schlitten verbunden ist, außerhalb des Werkstückaufnahmeraums zwischen dem ersten und dem zweiten Schlitten verlaufend angeordnet ist, wobei er vorzugsweise den Werkstückaufnahmeraum teilweise umschließt bzw. umgreift. Die erste und die dritte Bahn sind dabei vorteilhafterweise parallel zueinander verlaufend angeordnet und vorzugsweise geradlinig angeordnet.

Die Vorrichtung weist vorteilhafterweise weiterhin einen Drehantrieb zum Drehen eines Werkstücks um eine vorbestimmte Drehachse auf, wobei der Drehantrieb mit dem Werkstück so verbindbar ist, dass das Werkstück, wenn es mit dem Drehantrieb verbunden ist und wenn der Drehantrieb sich dreht, im Werkstückaufnahmeraum um die vorbestimmte Drehachse rotiert. Der Drehantrieb weist dabei vorzugsweise einen Drehwinkelgeber auf. Wenn ein Drehwinkelgeber vorhanden ist, kann das Werkstück beispielsweise in eine genaue Position gebracht werden, in der es dann mit den an den Schlitten angeordneten Messsensoren punktuell vermessen werden kann.

Die Vorrichtung zeichnet sich vorteilhafterweise dadurch aus, dass zumindest ein Teil des Werkstückaufnahmeraums zwischen dem ersten und dem zweiten Schlitten und/oder zwischen dem zweiten und dem dritten Schlitten bewegbar ist, sofern die Vorrichtung wenigstens drei Schlitten aufweist. So kann das Werkstück, beispielsweise zur Bestimmung von Werkstückdurchmessern, immer von einander gegenüberliegenden Seiten gleichzeitig vermessen werden, wenn die Schlitten, zwischen denen das Werkstück angeordnet ist, mit den entsprechenden Messsensoren versehen sind.

Um beispielsweise ein rotierendes Werkstück in einer bestimmten Ebene senkrecht zu seiner Rotationsachse vermessen zu können, ist es vorteilhaft, dass wenigstens einer der Schlitten einen, vorzugsweise elektrischen, Antrieb, aufweist sowie vorzugsweise eine Messanordnung mit der die Lage des wenigstens einen Schlittens auf seiner Bahn bestimmbar ist. Der wenigstens eine Schlitten kann dann in die gewünschte Position gefahren werden und, vorteilhafterweise zusammen mit einem mitgeschleppten Schlitten, auf dem sich ebenfalls wenigstens ein Messsensor befindet, das Werkstück an der gewünschten Position vermessen.

Mit der beschriebenen Vorrichtung können kombinierte aber dennoch unabhängige Messungen sowohl mit taktilen, als auch mit optischen Sensoren durchgeführt werden. Es können Kombinationen von optischen und/oder taktilen und/oder induktiven und/oder kapazitiven Sensoren eingesetzt werden, um beispielsweise innerhalb eines universal einsetzbaren Messgerätes für eine werkstattorientierte Messung Längenmessungen an einem Werkstück durchzuführen, Werkstückdurchmesser an bestimmten Stellen des Werkstücks zu bestimmen, Abstände von Bohrungen zueinander im Werkstück zu bestimmen, Abstände zwischen Bohrung und Schulter eines Werkstücks zu ermitteln, sowie plane Messungen, Rundlaufmessungen und Rundheits- sowie Winkelvermessungen am Werkstück vorzunehmen. Auch die messtechnische Auswertung sämtlicher Form- und Lagetoleranzen kann erfolgen. Weiterhin ist es möglich, exzentrische Formen, Konturen und unrunde Teile, mikrometergenau zu vermessen und spezifische Kenngrößen daraus zu berechnen. Oberflächenstrukturen lassen sich auf diese Weise analysieren und in ihrer Güte bewerten.

Zur Messung der Durchmesser werden beispielsweise bei der taktilen Prüfung mindestens zwei gegenseitig versetzte hochauflösende Tastsysteme bzw. Tastsysteme, die um einen bestimmten Winkel zueinander versetzt sind, eingesetzt. Die hochauflösenden Tastsysteme sind zum einen linear verschiebbar, zum anderen können sie zusätzlich in der Winkellage drehbar gelagert sein. Die auswechselbaren Tastköpfe mit individuell gestalteten Tasteinsätzen lassen sich jederzeit an der vorderen Messspitzenaufnahme in der Winkellage an geänderte geometrische Formen schwimmend anpassen und sich automatisch mittels einer drehbaren Aufnahme beispielsweise an sämtliche winklige Geometrien selbst ausrichten. Auf diese Weise können beispielsweise Steigungen bei Gewinden bestimmt werden, Schnecken, Zahnräder, Trapez- und Kontrollspindeln bzw. jede Art von Konstruktionselementen, die eine Drehbewegung in eine Linearbewegung umsetzen und deren Umsetzungsgrößen direkt am Objekt vermessen werden sollen. Hierbei lassen sich sowohl die Hubbewegungen über hochauflösende Wegmesssysteme, als auch die Winkel der Taster/Tastköpfe elektronisch über Sensoren/ Wegmesssysteme und Winkelmesssysteme ermitteln. Andererseits können natürlich auch Kamera-/Lasersysteme in Kombination zu den mechanischen Tastsystemen oder auch einzeln eingesetzt werden, um das Werkstück zu vermessen.

Kraftsensoren in den Messschiebersystemen erlauben beispielsweise bei manuellem Betrieb eine kraftgesteuerte bzw. kraftüberwachte bzw. im automatisierten Betrieb kraftgeregelte reproduzierbare Vermessung eines Werkstücks. Neben Flankendurchmesser und der drehwinkelabhängigen Vermessung von Spindeln können positionsabhängig die Flankenwinkel, die Steigungsfehler und deren Schwankungsbreite über dem Hub gemessen und protokolliert werden. Die Vorrichtung kann daher so aufgebaut werden, dass sie sich an sämtliche geometrischen Verhältnisse eines Werkstücks anpasst. Dies kann dadurch erfolgen, dass beispielsweise die auf den Schlitten angebrachten Sensoren nicht starr auf den Schlitten angebracht sind, sondern beweglich in wenigstens eine Raumrichtung angeordnet sind.

Die Schlittenbewegungen des ersten und/oder zweiten und/oder dritten Schlittens können automatisiert, zum Beispiel über elektrisch gesteuerte Antriebe, erfolgen. Die Bewegungen des ersten und/oder zweiten und/oder dritten Schlittens können dabei über eigene Messsysteme zur Längenmessung erfaßt werden. So können beispielsweise Inkrementgeber vorgesehen sein, die die exakte Position des ersten und/oder zweiten und/oder dritten Schlittens erfassen.

Die in einer vorteilhaften Ausführungsform verwendeten Kopplungsbügel beispielsweise können über Schnellkupplungen lösbar mit den Schlitten verbunden sein, so dass sie sich sekundenschnell lösen und entfernen lassen, und in der gleichen Geschwindigkeit auch, beispielsweise nachdem das Werkstück entnommen worden ist, oder ein neues Werkstück eingesetzt worden ist, wieder anbringen lassen.

Damit derart flexible Messungen möglich sind, weist die Vorrichtung vorteilhafterweise an zumindest einem Schlitten wenigstens einen Sensor zur Vermessung eines im Werkstückaufnahmeraum aufgenommenen Werkstücks auf, wobei der Sensor an dem zumindest einen Schlitten befestigt ist. Besonders vorteilhaft dabei ist es, wenn am ersten und am zweiten Schlitten jeweils wenigstens ein Sensor zur Vermessung eines im Werkstückaufnahmeraum aufgenommenen Werkstücks befestigt ist.

In einer bevorzugten Ausführungsform ist sowohl die Position des ersten Schlittens auf der ersten Bahn, als auch die Position des dritten Schlittens auf der dritten Bahn exakt messbar. Erster und dritter Schlitten können dann, wenn sie nicht miteinander gekoppelt sind, an separaten, exakt bestimmbaren Positionen, die vorteilhafterweise automatisiert angefahren werden können, das Werkstück vermessen.

Vorteilhafterweise ist wenigstens ein Sensor ein taktiler Sensor, vorzugsweise ein Tastsensor. Der wenigstens eine Sensor ist dabei vorzugsweise ein hochauflösender Tastsensor oder ein Tastkopf, beispielsweise ein Kugeltaster, oder ein Scheibentaster, der auf einem der Schlitten angeordnet ist. Mit solchen Tastern können beispielsweise Nuten oder Gewindegänge, oder, in Kombination mit einer Bestimmung der Lage des Schlittens zusammen mit dem Messsensor Gewindesteigungen von beispielsweise rotierenden Werkstücken genau vermessen werden. Ein Sensor kann dabei beispielsweise ein Kraftsensor sein.

Vorzugsweise ist der wenigstens eine Sensor ein Scheibentaster, der in eine Richtung auf den Werkzeugraum gerichtet auf einem der Schlitten angeordnet ist und einen weiteren Drehwinkelgeber zur Bestimmung des Drehwinkels um die eine Richtung aufweist. Mit dem weiteren Drehwinkelgeber sind Drehungen des Sensors um eine in die eine Richtung weisende Achse und Änderungen von Drehwinkelstellungen feststellbar. Somit können beispielsweise die Flankenwinkel von Gewindegängen gemessen werden. Auftretende Änderungen des Flankenwinkels eines Gewindegangs bei der Messung des Gewindegangs können dann beispielsweise durch sich ändernde Werte des weiteren Drehwinkelgebers detektiert werden. Auf diese Weise kann mit relativ einfachen Mitteln die Variation des Flankenwinkels in einem Gewindegang bestimmt werden.

Um maximale Flexibilität zu gewährleisten, ist wenigstens ein Sensor, vorteilhafterweise um wenigstens eine weitere Achse, drehbar, beispielsweise über eine gelenkige Verbindung, an dem Schlitten gelagert.

In einer bevorzugten Ausführungsform ist wenigstens ein Sensor federnd angeordnet, damit er, insbesondere wenn er ein Tastsensor ist, am Werkstück federnd anliegt, was besonders bei unrunden Werkstücken vorteilhaft ist. Die Federkraft kann gemessen werden, das Messergebnis kann aufgezeichnet werden und aus dem Messergebnis kann die Unrundheit des Werkstücks an einer bestimmten Stelle bestimmt werden.

Anstatt federnd, bzw. kraftgesteuert, kann der wenigstens eine Sensor auch kraftgeregelt und/oder geschwindigkeitsgeregelt angeordnet sein. Er kann pneumatisch oder servomechanisch geregelt sein, so dass er das im Werkstückraum aufgenommene Werkstück mit einer vorbestimmten Kraft berührt, was insbesondere bei elastisch verformbaren Werkstücken oder Werkstücken aus Kunststoff vorteilhaft sein kann.

Wenigstens ein Sensor kann ein optischer Sensor, vorzugsweise eine Kamera oder ein Laser sein. Mit optischen Sensoren können Werkstücke berührungslos vermessen werden.

In wiederum einer vorteilhaften Ausführungsform ist wenigstens ein Sensor senkrecht zur Rotationsachse des Werkstücks auf einer, die Rotationsachse des Werkstücks schneidenden Gerade angeordnet, damit beispielsweise Werkstückdurchmesser genau bestimmt werden können.

Besonders vorteilhaft ist es, wenn wenigstens einer der Schlitten, vorteilhafterweise zusätzlich zu dem oder zu den Messsensoren, ein Bearbeitungswerkzeug aufweist. Dies ermöglicht die Durchführung von Messungen am Werkstück, während das Werkstück bearbeitet wird.

Die erfinderische Vorrichtung kann auf einer Werkzeugmaschine, beispielsweise auf einer mechanischen Drehbank oder auf einer CNC-Maschine angeordnet werden, um das zu bearbeitende, oder das bereits bearbeitete Werkstück zu vermessen. Die schnelle Wechselmöglichkeit auf unterschiedlichsten Werkstückaufnahmen - fix, abstützend und/oder rotierend - ohne Ausricht- und Justageaufwand geben der erfindungsgemäßen Vorrichtung eine nahezu uneingeschränkte praxisorientierte Anwendbarkeit bei einem dennoch hochpräzisen Anwendungsfeld.

In einer Ausführung kann der erste Schlitten beispielsweise auf einer Werkzeugmaschine arretiert angeordnet sein, während das Werkstück entlang einer Rotationsachse des Werkstücks am Schlitten vorbei bewegt und entweder entlang einer Messlinie auf der Außenfläche des Werkstücks vermessen wird, oder, wenn das Werkstück während der Vermessung rotiert, beispielsweise entlang einer Werkstückumfangslinie vermessen wird. Der zweite Schlitten, dessen Bewegungsbahn fest mit dem ersten Schlitten verbunden ist, kann während das Werkstück am ersten Schlitten vorbeibewegt wird, mit auf dem zweiten Schlitten befestigten Messsensoren beispielsweise entlang der zweiten Schlittenbahn ebenfalls Messungen anderer Parameter am Werkstück vornehmen.

Die Einfachheit des Systems besticht dadurch, dass zum einen kein Programmieraufwand notwendig wird, um die notwendigen Messergebnisse zu erhalten, zum anderen ist die erfinderische Vorrichtung dennoch auch modular aufbaubar, so dass eine autarke Messzelle aufgebaut werden kann, welche eine vollständige Kontrolle über das zu bearbeitende Werkzeug ermöglicht. Dazu können beispielsweise grafisch geführte Softwaremodule, die die Beurteilung der Messergebnisse unterstützen, aufgebaut werden, die die automatischen Berechnungen für die benutzerorientierte Auswertung und Ausgabe durchführen, und die bei Bedarf flexibel hinzugeschaltet werden können.

Bei dem Verfahren zum Bestimmen eines Parameters eines Werkstücks mit der erfindungsgemäßen Vorrichtung ist in der einfachsten Version das Werkstück in den Werkstückaufnahmeraum aufgenommen und auf wenigstens einem der Schlitten ein Messsensor angeordnet, mit dem der eine Parameter aus dem wenigstens einen vom Messsensor ermittelten Messwert bestimmt wird.

Unter einem Werkstückaufnahmeraum soll, sofern das Werkstück nicht drehbar angeordnet ist, in dieser Beschreibung und in dieser Anmeldung der kleinste, das Werkstück vollständige umschließende Raum verstanden werden, wobei bei einem drehbar angeordneten Werkstück unter dem Werkstückaufnahmeraum der kleinste, das sich drehende Werkstück vollständig umschließende Raum verstanden werden soll.

Die in der nachfolgenden Beschreibung verwendeten Bezeichnungen, wie oben, unten, links und rechts und ähnliches beziehen sich auf Ausführungsbeispiele und sollen in keiner Weise einschränkend sein, auch dann nicht, wenn sie sich auf bevorzugte Ausführungsformen beziehen.

Die Erfindung wird nachfolgend anhand von Zeichnungen näher erläutert. Ähnliche Elemente werden mit gleichen Bezugszeichen in den jeweiligen Figuren gekennzeichnet. Es zeigen:
- Figur 1:: ein Beispiel für eine Vorrichtung mit zwei Schlitten,
- Figur 2:: ein Beispiel für eine Vorrichtung mit drei Schlitten an einer Drehbank,
- Figur 3:: Eine nicht isoliert beanspruchte Messanordnung mit einer Kamera.

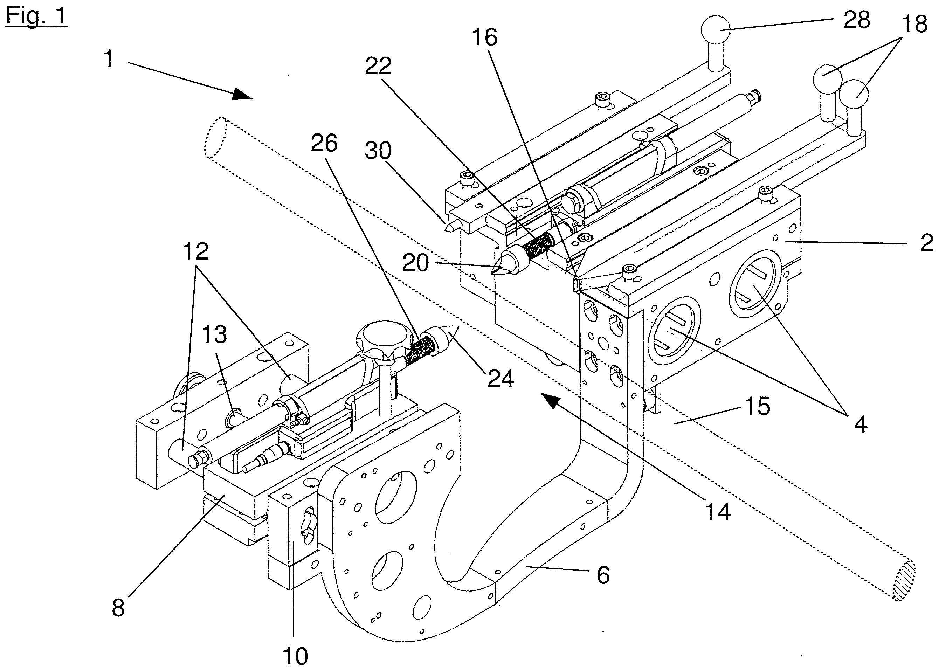

Die in Figur 1 dargestellte Vorrichtung 1 zeigt einen ersten Schlitten 2, der als Hauptschlitten ausgebildet ist und in einer ersten Bahn (nicht dargestellt) geführt wird. Der Hauptschlitten 2 weist zwei Bahnführungsöffnungen 4 auf, in welche zwei erste Bahnführungen (nicht dargestellt), die die erste Bahn definieren, so aufgenommen werden, dass der erste Schlitten 2 auf diesen Bahnführungen bewegbar aufgenommen wird. Die zwei ersten Bahnführungen (nicht dargestellt) sind parallel zueinander angeordnet.

Der erste Schlitten 2 ist über einen Kopplungsbügel 6 mit einem zweiten Schlitten 8 verbunden. Der Kopplungsbügel 6 ist dabei fest mit dem ersten Schlitten 2 und einem Bahnführungselement 10 verbunden.

Im Ausführungsbeispiel in Figur 1 ist das Bahnführungselement 10 nur am Kopplungsbügel 6 befestigt und wird nur vom ebenfalls am Kopplungsbügel 6 befestigten ersten Schlitten 2 geführt.

Das Bahnführungselement 10 könnte jedoch zur zusätzlichen Stabilisierung des ersten Schlittens 2 noch an einer oder mehreren weiteren Bahnführungen, die parallel zu den zwei die erste Bahn definierenden Bahnführungen verlaufend angeordnet sind, beweglich geführt sein. So könnte beispielsweise das Bahnführungselement 10 eine entsprechende Anzahl von Bahnführungsöffnungen aufweisen, durch welche, die weitere oder die weiteren Bahnführungen relativ zum Kopplungsbügel 6 bewegbar hindurch geführt sind.

Das Bahnführungselement 10 ist mit Führungsstangen 12, die eine zweite Bahn für den zweiten Schlitten 8 definieren, fest verbunden. Auf den Führungsstangen 12 ist der zweite Schlitten 8, der auf diese Weise als vom ersten Schlitten geschleppter, und relativ zum ersten Schlitten schwimmend mitgeführter Einzelschlitten ausgeführt ist, entlang der Führungsstangen 12 frei beweglich angeordnet. Durch diese Kopplung des ersten Schlittens 2 mit dem zweiten Schlitten 8 wird eine synchron geschleppte und kombinierte Mehrschlittenbewegung in Form einer Master-Slave-Bewegung ermöglicht. Der geschleppte Einzelschlitten 8 kann dabei über die Führungsstangen 12 des zweiten Schlittens sich zusätzlich relativ zur Hauptbewegung des Hauptschlittens 2 bewegen. Der zweite Schlitten kann sich schwimmend mit dem ersten Schlitten bewegen. Eine zwischen den beiden Führungsstangen 12 angeordnete Mittelstange 13 kann zum Feststellen bzw. Klemmen oder Arretieren des zweiten Schlittens mit beispielsweise einem auf der Mittelstange 12 führbar angeordenten Klemmelement verwendet werden.

Zwischen dem ersten Schlitten 2 und dem zweiten Schlitten 8 befindet sich ein Werkstückaufnahmeraum 14, in welchem ein Werkstück 15 (in Figur 1 nicht dargestellt) rotierend aufgenommen ist.

Das rotierend aufgenommene Werkstück 15 kann beispielsweise mit Bearbeitungswerkzeugen (nicht dargestellt), die beispielsweise am ersten Schlitten 2 und/oder am zweiten Schlitten 8 befestigt sind, bearbeitet werden.

In Figur 1 sind Messspitzen 16, die an Messschiebern 18, am ersten Schlitten 2 schiebbar befestigt sind, angeordnet. Die Messspitzen 16 können beispielsweise die Messspitzen von Sensoren für Längenmessungen, Abstandsmessungen und/oder Einstichsmessungen sein.

An den Schlitten können mehrere Messsensoren angeordnet sein. Ein, beispielsweise taktiler, Messsensor 20, der über eine Federung 22 federnd ebenfalls mit dem Hauptschlitten 2 verbunden ist, kann vor, während und/oder nach der Bearbeitung des Werkstücks das Werkstück berührend vermessen. Ein dem Messsensor 20 gegenüberliegender weiterer Messsensor 24 ist ebenfalls über eine Federung 26 gefedert und mit dem geschleppten Einzelschlitten 8 verbunden.

Da der zweite Schlitten schwimmend gegenüber dem ersten Schlitten bewegbar ist, kann der weitere Messsensor 24 beispielsweise Nuten oder Gewindegänge in einem Werkstück vermessen, während das in der Werkstückaufnahme 14 angeordnete Werkstück rotiert und beispielsweise mit einem Bearbeitungswerkzeug bearbeitet wird. Da der weitere Messsensor 24 gegenüber dem ersten Schlitten 2 schwimmend aufgehängt ist, kann so beispielsweisewährend das rotierende Werkstück entlang seiner Rotationsachse rotiert, mit den Messsensoren 20 und 24 gleichzeitig ein Gewindegang vermessen werden. Aus den Änderungen der relativen Abstände zwischen den beiden Messsensoren 20, 24 können so beispielsweise Steigungsänderungen im Gewindegang bestimmt werden. Aus dem absoluten Abstand zwischen den beiden Messsensoren 20, 24 läßt sich der Steigungswinkel der Nut ermitteln.

Ein mit einem Schieber 28 einstellbarer Bohrungsmittensensor 30 kann beispielsweise die Mitte eines im Werkstück angeordneten Bohrlochs erfassen. Auf diese Weise werden Bohrungsmittenabstandsmessungen oder Messungen zwischen einer Bohrungsmitte und der Schulter eines Werkstücks möglich.

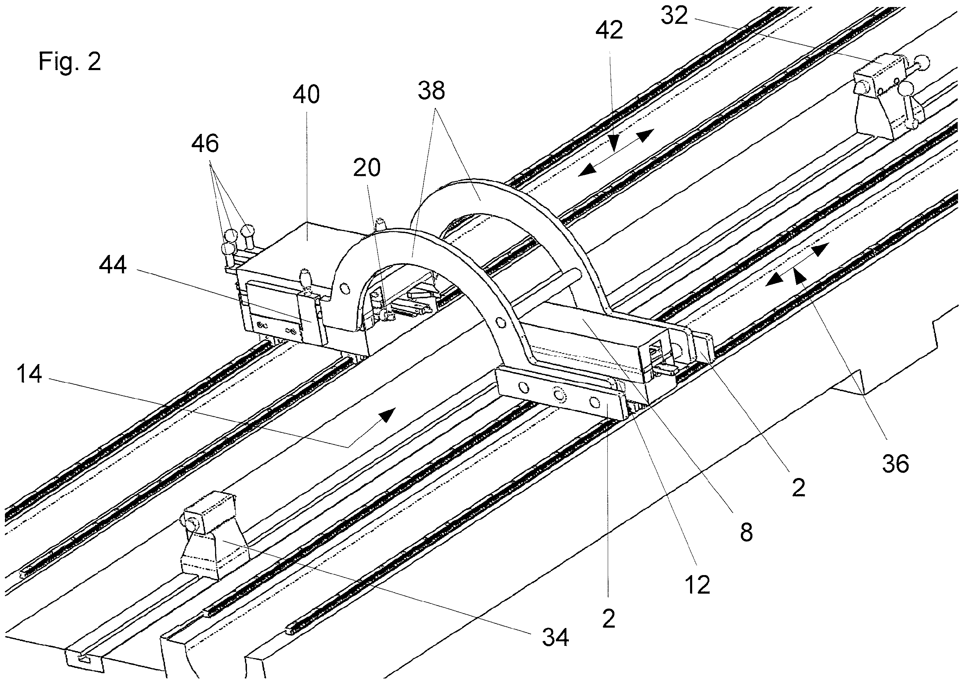

Figur 2 zeigt eine auf einer Drehbank angeordnete Vorrichtung 1 mit drei Schlitten. Zwischen zwei Werkstückaufnahmen 32, 34 kann in den Werkstückaufnahmeraum 14 ein Werkstück 15 drehbar um eine durch die beiden Werkstückaufnahmen 32, 34 definierte Rotationsachse aufgenommen werden. Der erste Schlitten 2 ist auf einer ersten Bahn 36, die parallel zur Rotationsachse in der Figur 2 rechts vom Werkstückaufnahmeraum verlaufend angeordnet ist, bewegbar. Der zweite Schlitten 8 ist auf am ersten Schlitten 2 befestigten Führungsstangen 12 bewegbar auf der gleichen Seite des Werkstückaufnahmeraums 14 angeordnet. Über einen Bügel 38, der den Werkstückaufnahmeraum teilweise umgreift, ist ein dritter Schlitten 40 mit dem ersten Schlitten 2 verbindbar.

Der dritte Schlitten 40 ist in Figur 2 links vom Werkstückaufnahmeraum 14 und auf einer dritten Bahn 42, die parallel zur Rotationsachse links vom Werkstückaufnahmeraum 14 verläuft, bewegbar angeordnet.

Der dritte Schlitten 40 weist eine Bügelarretierung 44 auf, an welcher der Bügel 38 den ersten Schlitten 2 mit dem dritten Schlitten 40 verbindend befestigt werden kann. Der Bügel 38 kann dabei beispielsweise schwenkbar am ersten Schlitten 2 befestigt ausgebildet sein, so dass er bei Bedarf mit dem dritten Schlitten 40 verbunden werden kann. Wenn der erste Schlitten 2 mit dem dritten Schlitten 40 über den Bügel 38 verbunden ist, können der erste und der dritte Schlitten parallel zueinander am Werkstück entlang bewegt werden.

Am dritten Schlitten 40 sind Schieber 46 angeordnet, die Messsensoren tragen, die aber auch Bearbeitungswerkzeuge tragen könnten, mit denen ein im Werkstückaufnahmeraum 14 aufgenommenes Werkstück bearbeitet werden kann, während beispielsweise auf der gegenüberliegenden Seite mit auf dem zweiten Schlitten 8 angeordneten Messsensoren das Werkstück vermessen werden kann.

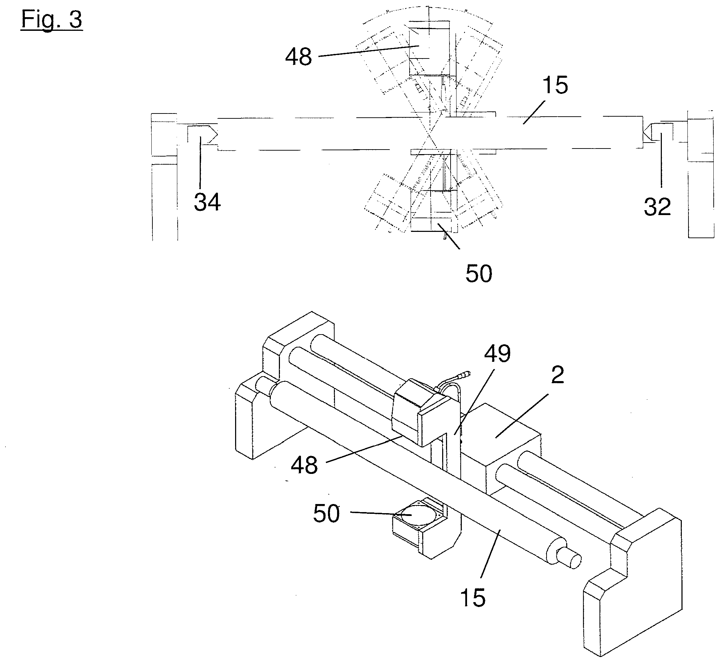

Figur 3 zeigt eine nicht isoliert beanspruchte Messanordnung mit einer Kamera 48, mit der beispielsweise Messparameter von Spindeln oder Gewinden ermittelt werden können. Die Kamera ist schwenkbar am oberen Teil eines Schwenkarms 49 so angeordnet, dass sie auf den Werkstückaufnahmeraum 14 gerichtet ist, wobei der Schwenkarm beispielsweise am ersten Schlitten 2 schwenkbar angeordnet ist. Der Schwenkarm 49 weist, zum leichteren Schwenken der Kamera 48, ein der Kamera gegenüberliegendes Gegengewicht auf, an welchem beispielsweise eine Gegenlichtquelle 50 zum Ausleuchten des im Werkstückaufnahmeraums 14 aufgenommenen Werkstücks 15 angeordnet sein kann. Auf der Kameraseite kann eine, in Richtung Werkstückaufnahmeraum 14 weisende Auflichtquelle angeordnet sein. Der Schwenkarm 49 ist außerhalb des Werkstückaufnahmeraums 14 verlaufend angeordnet. Er kann den Werkstückaufnahmeraum 14 auch teilweise umschließen. Die Auflichtquelle kann in einer Ausführung separat so auf das Werkstück 15 gerichtet werden, dass die Kamera 48 zu vermessende Nuten und/oder Gewindegänge, die am Werkstück 15 angeordnet sind, ausleuchten kann. Auf diese Weise können aus dem mit der Kamera 48 aufgezeichneten Bild Messparameter wie Steigungswinkel des Gewindegangs oder Flankenwinkel des Gewindegangs ermittelt werden.

Die Erfindung wurde anhand bevorzugter Ausführungsbeispiele erläutert, ohne auf diese Ausführungsbeispiele beschränkt zu sein.

Insbesondere können, je nach gewünschter Messung, unterschiedliche Sensoren miteinander kombiniert auf den einzelnen Schlitten angeordnet werden, ohne dass dadurch der Erfindungsgedanke verlassen wird. Auch die Anordnung der Schlitten kann variieren, sofern wenigstens ein von einem ersten Schlitten geschleppter zweiter Schlitten angeordnet ist, ohne dass dadurch der Erfindungsgedanke verlassen wird. So kann beispielsweise ein zweiter oder es können beispielsweise mehrere zweite Schlitten auf Schlittenführungsbahnen bewegbar angeordnet sein, die mit dem ersten Schlitten fest verbunden sind. Die Anordnung kann einen oder mehrere dritte Schlitten aufweisen, die beispielsweise über Kopplungselemente mit dem ersten oder einem der zweiten Schlitten fest verbunden sind. Die zweiten Schlitten können beispielsweise auf einer gemeinsamen Bahn oder auch auf verschiedenen Bahnen beweglich angeordnet sein.

### Bezugszeichenliste

- 1: Vorrichtung
- 2: erster Schlitten
- 4: Bahnführungsöffnung
- 6: Kopplungsbügel
- 8: zweiter Schlitten
- 10: Bahnführungselement
- 12: Führungsstange, Schlittenführung
- 13: Mittelstange
- 14: Werkstückaufnahmeraum
- 15: Werkstück
- 16: Messspitze
- 18: Schieber
- 20: erster Messsensor
- 22: Federung
- 24: zweiter Messsensor
- 26: Federung
- 28: Schieberführung
- 30: Messspitze
- 32: Werkstückaufnahme
- 34: Werkstückaufnahme
- 36: erste Bahn
- 38: Bügel
- 40: dritter Schlitten
- 42: dritte Bahn
- 44: Bügelarretierung
- 46: Schieber
- 48: Kamera
- 49: Schwenkarm
- 50: Gegenlichtquelle

## Patentansprüche

1. Vorrichtung (1) zum Vermessen eines Werkstücks (15), aufweisend
- einen Werkstückaufnahmeraum (14),
- einen auf einer ersten Bahn (36) mittels einer ersten Schlittenführung mit mindestens zwei Bahnführungsöffnungen (4) relativ zum Werkstückaufnahmeraum (14) und entlang wenigstens eines Teils des Werkstückaufnahmeraums (14) außerhalb des Werkstückaufnahmeraums (14) bewegbaren ersten Schlitten (2),
- wenigstens einen relativ zum Werkstückaufnahmeraum (14) und entlang wenigstens eines Teils des Werkstückaufnahmeraums (14) außerhalb des Werkstückaufnahmeraums (14) sowie parallel zur ersten Bahn (36) auf Führungsstangen (12) bewegbaren zweiten Schlitten (8),
- der zweite Schlitten (8) ist über einen Kopplungsbügel (6) an der am ersten Schlitten (2) befestigt angeordneten ersten Schlittenführung bewegbar geführt angeordnet, **dadurch gekennzeichnet, dass** der zweite Schlitten (8) auf einer zweiten Schlittenführung (12), die parallel zur ersten Schlittenführung angeordnet ist, beweglich angeordnet ist, wobei die zweite Schlittenführung (12) über den Kopplungsbügel (6), der außerhalb des Werkstückaufnahmeraums (14) verlaufend angeordnet ist, mit dem ersten Schlitten (2) fest verbunden ist, derart, dass der zweite Schlitten (8) schwimmend mit dem ersten Schlitten (2) bewegbar ist.

2. Vorrichtung (1) nach Anspruch 1,
**dadurch gekennzeichnet, dass**
die zweite Schlittenführung (12) eine Schlittenführung mit zwei parallel angeordneten Führungsstangen ist.

3. Vorrichtung (1) nach Anspruch 1 oder 2,
**dadurch gekennzeichnet, dass**
der erste Schlitten (2) und/oder der wenigstens eine zweite Schlitten (8) eine Fixierung aufweist, mit der der wenigstens eine zweite Schlitten (8) an dem ersten Schlitten (2) fixierbar ist.

4. Vorrichtung (1) nach einem der vorigen Ansprüche,
**dadurch gekennzeichnet, dass**
der erste Schlitten (2) und/oder der wenigstens eine zweite Schlitten (8) eine Messanordnung aufweist, mit der die Lage des wenigstens einen zweiten Schlittens (8) relativ zum ersten Schlitten (2) bestimmbar ist.

5. Vorrichtung (1) nach einem der vorigen Ansprüche,
**dadurch gekennzeichnet, dass**
die erste Bahn (36) und die dritte Bahn (42) parallel zueinander verlaufend, vorzugsweise geradlinig, angeordnet sind.

6. Vorrichtung (1) nach einem der vorigen Ansprüche,
**dadurch gekennzeichnet, dass**
die Vorrichtung (1) weiterhin einen Drehantrieb zum Drehen des Werkstücks (15) um eine vorbestimmte Drehachse aufweist, der mit dem Werkstück (15) so verbindbar ist, dass das Werkstück (15) , wenn es mit dem Drehantrieb verbunden ist und wenn der Drehantrieb sich dreht, im Werkstückaufnahmeraum (14) um die vorbestimmte Drehachse rotiert, wobei der Drehantrieb vorzugsweise einen Drehwinkelgeber aufweist.

7. Vorrichtung (1) nach einem der vorigen Ansprüche,
**dadurch gekennzeichnet, dass** zumindest ein Teil eines im Werkstückaufnahmeraum (14) aufgenommenen Werkstücks (15) zwischen dem ersten Schlitten (2) und dem zweiten Schlitten (8) und/oder zwischen dem zweiten Schlitten (8) und dem dritten Schlitten (40) bewegbar angeordnet ist.

8. Vorrichtung (1) nach einem der vorigen Ansprüche,
**dadurch gekennzeichnet, dass** wenigstens einer der Schlitten (2, 8, 40) einen, vorzugsweise elektrischen, Antrieb aufweist, sowie vorzugsweise eine Messanordnung, mit der die Lage des wenigstens einen Schlittens (2, 8, 40) auf seiner Bahn bestimmbar ist.

9. Vorrichtung (1) nach einem der vorigen Ansprüche,
**dadurch gekennzeichnet,dass**
an zumindest einem Schlitten (2, 8, 40) wenigstens ein Sensor (20, 24, 30) zur Vermessung eines im Werkstückaufnahmeraum (14) aufgenommenen Werkstücks (15) befestigt ist.

10. Vorrichtung (1) nach einem der vorigen Ansprüche,
**dadurch gekennzeichnet,dass**
am ersten Schlitten (2) und am zweiten Schlitten (8) jeweils wenigstens ein Sensor (20, 24, 30) zur Vermessung eines im Werkstückaufnahmeraum (14) aufgenommenen Werkstücks (15) befestigt ist.

11. Vorrichtung (1) nach Anspruch 9 oder 10,
**dadurch gekennzeichnet, dass** wenigstens ein Sensor (20, 24, 30) ein taktiler Sensor, vorzugsweise ein Tastsensor und/oder ein Kraftsensor ist.

12. Vorrichtung (1) nach einem der Ansprüche 9 bis 11,
**dadurch gekennzeichnet, dass** wenigstens ein Sensor (20, 24, 30) ein hochauflösender Tastsensor oder ein Tastkopf, vorzugsweise ein Kugeltaster oder ein Scheibentaster ist.

13. Vorrichtung nach einem der Ansprüche 9 bis 12,
**dadurch gekennzeichnet,dass** wenigstens ein Sensor (20, 24, 30) ein Scheibentaster ist, der in eine Richtung auf den Werkzeugraum (14) weisend auf einem der Schlitten (2, 8, 40) angeordnet ist, und der einen weiteren Drehwinkelgeber zur Bestimmung des Drehwinkels um die eine Richtung aufweist.

14. Vorrichtung (1) nach einem der Ansprüche 9 bis 13,
**dadurch gekennzeichnet, dass** wenigstens ein Schlitten (2, 8, 40) ein Bearbeitungswerkzeug aufweist.

15. Vorrichtung (1) nach einem der Ansprüche 9 bis 14,
**dadurch gekennzeichnet, dass** wenigstens ein Sensor (20, 24, 30) drehbar an einem Schlitten (2, 8, 40) gelagert angeordnet ist.

16. Vorrichtung (1) nach einem der Ansprüche 9 bis 15,
**dadurch gekennzeichnet,dass** wenigstens ein Sensor (20, 24, 30) kraft- und geschwindigkeitsgeregelt ist.

17. Vorrichtung (1) nach einem der Ansprüche 9 bis 16,
**dadurch gekennzeichnet, dass** wenigstens ein Sensor (20, 24, 30) ein optischer Sensor, vorzugsweise eine Kamera (48) oder ein Laser, ist.

18. Vorrichtung (1) nach Anspruch 6 und einem der Ansprüche 9 bis 17,
**dadurch gekennzeichnet, dass** wenigstens ein Sensor (20, 24, 30) senkrecht zur Rotationsachse auf einer, die Rotationsachse schneidenden Gerade angeordnet ist.

19. Werkzeugmaschine, aufweisend eine Vorrichtung (1) nach einem der vorigen Ansprüche.

20. Verfahren zum Bestimmen wenigstens eines Parameters eines Werkstücks (15) mit einer Vorrichtung (1) nach einem der vorigen Ansprüche,
**dadurch gekennzeichnet, dass**
das Werkstück (15) in den Werkstückaufnahmeraum (14) aufgenommen wird und der wenigstens eine Parameter aus wenigstens einem Messwert wenigstens eines auf einem Schlitten (2, 8, 40) angeordneten Sensors (20, 24, 30) bestimmt wird.

## Claims

1. Device (1) for measuring a work piece (15), comprising
- a work piece receiving room (14),
- a first carriage (2) which can be moved on a first track (36) relative to the work piece receiving room (14) and along at least a part of the work piece receiving room (14), outside of the work piece receiving room (14), by means of a first carriage guide with at least two track guide openings (4),
- at least one second carriage (8) which can be moved on guide rods (12) relative to the work piece receiving room (14) and along at least a part of the work piece receiving room (14), outside of the work piece receiving room (14), parallel to the first track (36),
- the second carriage (8) being arranged moveably guidable on the first carriage guide attached to the first carriage (2) via a coupling bracket (6),
**characterized in that** the second carriage (8) is moveably arranged on a second carriage guide (12) that is arranged parallel to the first carriage guide, wherein the second carriage guide (12) is rigidly connected, via the coupling bracket (6) that is arranged extending outside of the work piece receiving room (14), to the first carriage (2) such that the second carriage (8) can be floatingly moved with the first carriage (2).

2. Device (1) in accordance with claim 1,
**characterized in that**
the second carriage guide (12) is a carriage guide with two guide rods arranged in parallel.

3. Device (1) in accordance with claim 1 or 2,
**characterized in that**
the first carriage (2) and/or the at least one second carriage (8) have a fastening element with which the at least one second carriage (8) can be fastened to the first carriage (2).

4. Device (1) in accordance with any of the preceding claims,
**characterized in that**
the first carriage (2) and/or the at least one second carriage (8) have a measuring arrangement with which the position of the at least one second carriage (8) relative to the first carriage (2) can be determined.

5. Device (1) in accordance with any of the preceding claims,
**characterized in that**
the first tract (36) and the third track (42) are arranged extending parallel to each other, preferably in a straight line.

6. Device (1) in accordance with any of the preceding claims,
**characterized in that**
the device (1) further comprises a rotational drive for rotating the work piece (15) around a predetermined axis which can be connected to the work piece (15) such that the work piece (15), when connected to the rotational drive and when the rotational drive rotates, rotates, in the work piece receiving room (14), around the predetermined axis, wherein the rotational drive preferably comprises an rotation angle sensor.

7. Device (1) in accordance with any of the preceding claims,
**characterized in that**
at least one part of the work piece (15) received in the work piece receiving room (14) is moveably arranged between the first carriage (2) and the second carriage (8) and/or between the second carriage (8) and the third carriage (40).

8. Device (1) in accordance with any of the preceding claims,
**characterized in that**
at least one of the carriages (2, 8, 40) comprises a, preferably electric, drive, as well as, preferably, a measuring arrangement with which the position of the at least one carriage (2, 8, 40) on its track can be determined.

9. Device (1) in accordance with any of the preceding claims,
**characterized in that**
on at least one carriage (2, 8, 40), a sensor (20, 24, 30) for measuring a work piece (15) received in the work piece receiving room (14) is attached.

10. Device (1) in accordance with any of the preceding claims,
**characterized in that**
on both the first carriage (2), as well as on the second carriage (8) a respective sensor (20, 24, 30) for measuring a work piece (15) received in the work piece receiving room (14) is attached.

11. Device (1) in accordance with claim 9 or 10,
**characterized in that**
at least one sensor (20, 24, 30) is a tactile sensor, preferably a touch sensor or a force sensor.

12. Device (1) in accordance with any of claims 9 to 11,
**characterized in that**
the at least one sensor (20, 24, 30) is a high resolution touch sensor or a sensing head, preferably a ball probe or a disc probe.

13. Device (1) in accordance with any of claims 9 to 12,
**characterized in that**
the at least one sensor (20, 24, 30) is a disc probe that is arranged on one of the carriages (2, 8, 40), pointing in the direction of the work piece receiving room (14) and which comprises a further rotation angle sensor for determining the angle of rotation around the one direction.

14. Device (1) in accordance with any of claims 9 to 13,
**characterized in that**
at least one carriage (2, 8, 40) comprises a processing tool.

15. Device (1) in accordance with any of claims 9 to 14,
**characterized in that**
at least one sensor (20, 24, 30) is rotatably mounted on a carriage (2, 8, 40).

16. Device (1) in accordance with any of claims 9 to 15,
**characterized in that**
at least one sensor (20, 24, 30) is force and speed regulated.

17. Device (1) in accordance with any of claims 9 to 16,
**characterized in that**
at least one sensor (20, 24, 30) is an optical sensor, preferably a camera (48) or a laser.

18. Device (1) in accordance with claim 6 and any of claims 9 to 17,
**characterized in that**
at least one sensor (20, 24, 30) is arranged vertically to the angle of rotation on a straight line that intersects the angle of rotation.

19. Machine tool comprising a device (1) in accordance with any of the preceding claims.

20. Method for determining at least one parameter of a work piece (15) with a device (1) in accordance with any of the preceding claims,
**characterized in that**
the work piece (15) is received in the work piece receiving room (14) and the at least one parameter is determined from at least one measured value of at least one sensor (20, 24, 30) arranged on a carriage (2, 8, 40).

## Revendications

1. Dispositif (1) pour mesurer une pièce à travailler (15) comprenant :
- un espace de réception de pièces (14),
- un premier chariot mobile (2) sur un premier chemin de circulation (36) à l'aide d'un premier guide de chariot avec au moins deux orifices de guidage sur le chemin (4) par rapport à l'espace de réception de pièces (14) et le long d'au moins une partie de l'espace de réception de pièces (14), à l'extérieur de cet espace de réception de pièces (14),
- au moins un second chariot (8) mobile par rapport à l'espace de réception de pièces (14) et le long d'au moins une partie de l'espace de réception de pièces (14) à l'extérieur de cet espace de réception (14) et parallèlement au premier chemin (36) sur des tiges de guidage (12),
- le second chariot (8) est monté mobile de façon guidée, par un arceau de couplage (6) au premier guide de chariot fixé au premier chariot (2),
dispositif **caractérisé en ce que**
le second chariot (8) est monté de façon mobile, sur un second guide de chariot (12) parallèle au premier guide de chariot,
- le second guide de chariot (12) est relié solidairement au premier chariot (2) par l'arceau de couplage (6) qui est à l'extérieur de l'espace de réception de pièces (14), de façon que le second chariot (8) soit mobile de manière flottante avec le premier chariot (2).

2. Dispositif (1) selon la revendication 1,
**caractérisé en ce que**
le second guide de chariot (12) est un guide de chariot comportant deux tiges de guidage parallèles.

3. Dispositif (1) selon la revendication 1 ou 2,
**caractérisé en ce que**
le premier chariot (2) et/ou au moins un second chariot (8) comporte une fixation qui fixe au moins le second chariot (8) au premier chariot (2).

4. Dispositif (1) selon l'une des revendications précédentes,
**caractérisé en ce que**
le premier chariot (2) et/ou au moins le second chariot (8) comportent un dispositif de mesure qui permet de déterminer la position au moins du second chariot (8) par rapport au premier chariot (2).

5. Dispositif (1) selon l'une des revendications précédentes,
**caractérisé en ce que**
le premier chemin (36) et le troisième chemin (42) sont parallèles l'un à l'autre et sont de préférence rectilignes.

6. Dispositif (1) selon l'une des revendications précédentes,
**caractérisé en ce que**
le dispositif (1) comporte en outre un entrainement de rotation pour faire tourner la pièce (15) autour d'un axe de rotation prédéfini qui est relié à la pièce (15) de façon que la pièce (15) tourne dans l'espace de réception pièce (14) autour de l'axe de rotation prédéfini, lorsqu'elle est reliée à l'entrainement de rotation et lorsque l'entrainement en rotation tourne,
- l'entrainement en rotation comporte de préférence un capteur d'angle de rotation.

7. Dispositif (1) selon l'une des revendications précédentes,
**caractérisé en ce qu'**
au moins une partie d'une pièce (15) reçue dans l'espace de réception de pièces (14) est mobile entre le premier chariot (2) et le second chariot (8) et/ou entre le second chariot (8) et le troisième chariot (40).

8. Dispositif (1) selon l'une des revendications précédentes,
**caractérisé en ce qu'**
au moins l'un des chariots (2, 8, 40) comporte un entrainement de préférence électrique et de préférence aussi un dispositif de mesure qui permet de déterminer la position d'au moins un chariot (2, 8, 40) sur son chemin de circulation.

9. Dispositif (1) selon l'une des revendications précédentes,
**caractérisé en ce qu'**
au moins un chariot (2, 8, 40) comporte au moins un capteur (20, 24, 30) pour mesurer une pièce (15) en étant fixée dans l'espace de réception de pièces (14).

10. Dispositif (1) selon l'une des revendications précédentes,
**caractérisé en ce qu'**
au moins un capteur (20, 24, 30) est prévu sur le premier chariot (2) et le second chariot (8) pour mesurer une pièce (15) mise dans l'espace de réception de pièces (14).

11. Dispositif (1) selon la revendication 9 ou 10,
**caractérisé en ce qu'**il est prévu
au moins un capteur (20, 24, 30), un capteur tactile de préférence un palpeur et/ou un capteur de force.

12. Dispositif (1) selon l'une des revendications 9 à 11,
**caractérisé en ce que**
au moins un capteur (20, 24, 30) est un palpeur ou une tête de palpeur à forte résolution, de préférence un palpeur à bille ou un palpeur à disque.

13. Dispositif (1) selon l'une des revendications 9 à 12,
**caractérisé en ce que**
au moins un capteur (20, 24, 30) est un capteur à disque monté sur l'un des chariots (2, 8, 40) orienté en direction de l'espace de réception de pièces (14) et comportant un autre capteur d'angle de rotation pour déterminer l'angle de rotation autour de cette direction.

14. Dispositif (1) selon l'une des revendications 9 à 13,
**caractérisé en ce qu'**
au moins un chariot (2, 8, 40) comporte un outil d'usinage.

15. Dispositif (1) selon l'une des revendications 9 à 14,
**caractérisé en ce qu'**
au moins un capteur (20, 24, 30) est monté à rotation sur un chariot (2, 8, 40).

16. Dispositif (1) selon l'une des revendications 9 à 15,
**caractérisé en ce qu'**
au moins un capteur (20, 24, 30) est régulé en fonction de la force et de la vitesse.

17. Dispositif (1) selon l'une des revendications 9 à 16,
**caractérisé en ce qu'**
au moins un capteur (20, 24, 30) est un capteur optique de préférence une caméra (48) ou un laser.

18. Dispositif (1) selon la revendication 6 et l'une des revendications 9 à 17,
**caractérisé en ce qu'**
au moins un capteur (20, 24, 30) est monté perpendiculairement à l'axe de rotation sur une droite coupant l'axe de rotation.

19. Machine-outil comportant un dispositif (1) selon l'une des revendications précédentes.

20. Procédé de détermination d'au moins un paramètre d'une pièce (15) avec un dispositif (1) selon l'une des revendications précédentes,
**caractérisé en ce que**
la pièce (15) est logée dans l'espace de réception de pièces (14) et on détermine au moins ce paramètre à partir d'au moins une valeur de mesure d'au moins un capteur (20, 24, 30) installé sur le chariot (2, 8, 40).
